Europäisches Patentamt

(19) European Patent Office

Office européen des brevets

(11) Publication number: **0 041 285**
**B1**

(12) **EUROPEAN PATENT SPECIFICATION**

(45) Date of publication of patent specification: **25.01.84**

(51) Int. Cl.³: **F 23 K 3/02**, B 65 G 53/52, C 10 J 3/50

(21) Application number: **81200521.3**

(22) Date of filing: **14.05.81**

(54) Safety device for a burner of a coal gasification plant.

(30) Priority: **29.05.80 NL 8003093**

(43) Date of publication of application:
**09.12.81 Bulletin 81/49**

(45) Publication of the grant of the patent:
**25.01.84 Bulletin 84/4**

(84) Designated Contracting States:
**BE DE FR GB IT NL**

(56) References cited:
**DE - C - 89 715**
**FR - A - 1 569 573**
**GB - A - 233 696**
**GB - A - 693 381**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Wu, Hsi Lin**
**Carel van Bylandtlaan 30**
**NL-2596 HR The Hague (NL)**

(74) Representative: **Puister, Antonius Tonnis, Mr. et al,**
**P.O. Box 302**
**NL-2501 CH The Hague (NL)**

Courier Press, Leamington Spa, England.

## Safety device for a burner of a coal gasification plant

The invention relates to a safety device for protecting against blockage a burner of a coal gasification plant fed with a mixture of coal particles and fluid.

It is known to gasify coal by partial combustion of coal in the presence of oxygen or air. In said process a mixture of coal particles and fluid is fed through a supply line to a burner of a coal gasification plant in which coal is partially combusted.

The mixture of coal particles and fluid sometimes contains foreign solid particles having larger dimensions than those of the coal particles and than those of the passages of the burner. In other words, said foreign particles (for example particles with a specific weight lower than that of the coal particles, non-ferro particles, textile particles, plastic particles, etc.) have such dimensions that on the one hand they can flow through the supply line to the burner, but on the other hand they can block passages of the burner. Blockage of a burner causes serious disruptions of the coal gasification process and often necessitates disassembly of the blocked burner.

It is known from GB—A—233,696 to use a safety device for protecting against blockage a burner of a coal combustion plant fed with a mixture of coal particles and fluid, which safety device comprises an inlet and an outlet for a fluid for removing blockages and a movable element. The movable element contains one channel in which a sieve is arranged. During operation the channel communicates the inlet and the outlet for the mixture of coal particles and fluid, the coal particles being filtered by the sieve. If the passing of the coal through the sieve is impeded e.g. by coal lumps, the element is shifted whereupon the channel communicates the inlet and outlet for the fluid for removing blockages and the sieve is cleaned. This means that during the cleaning of the sieve the coal transport cannot take place.

In FR—A—1,569,573 a cock plug for a press is described comprising two channels arranged under an angle of 90° to each other and each containing a filter. During operation a stream of plastic material is passed via a first pathway through the filter in the first channel, while the other filter is removed and replaced by a fresh filter. After rotation of the cock plug the stream of plastic material is passed via a second pathway through the fresh filter, while the filter in the first channel can be replaced.

When using such a cock plug in the transport of a mixture of coal particles and fluid the particles in the pathway which is not used may stick together and may impede the transport when the pathway is used again.

The object of the invention is to provide a safety device by means of which it is possible to prevent blockage of a burner of a coal gasification plant.

The invention, therefore, relates to a safety device for protecting against blockage a burner of a coal gasification plant fed with a mixture of coal particles and fluid, which safety device comprises an inlet and an outlet for the mixture of coal particles and fluid, an inlet and an outlet for a fluid for removing blockages, and a movable element, characterized in that the movable element is provided with at least two channels, each channel consisting of a wide and a narrow part, wherein the channels and the inlets and outlets are so arranged that, in a certain position of the movable element, a channel forms a communication between the inlet and outlet for the mixture of coal particles and fluid, in such a way that in the direction from inlet to outlet the narrow part is located after the wide part of the channel, and that another channel forms a communication between the inlet and outlet for the fluid for removing blockages, in such a way that in the direction from inlet to outlet the wide part is located after the narrow part of the channel, wherein the movable element can be displaced from said position to another position so that one channel takes the place of another channel.

In a preferred embodiment of the invention the movable element is movably arranged in a housing.

In an attractive embodiment of the safety device according to the invention the movable element is rotatably arranged.

In another possible embodiment of the safety device according to the invention the movable element is so arranged that it is linearly displaceable.

The invention will further be illustrated with reference to the drawings, in which:

Fig. 1 shows a cross-section of a first embodiment of the safety device according to the invention, provided with a rotatably arranged movable element.

Fig. 2 shows a cross-section of a second embodiment of the safety device according to the invention, provided with a movable element arranged in a linearly displaceable manner.

Fig. 3 shows a cross-section of the embodiment according to fig. 2 wherein the movable element is in another position than in fig. 2.

Fig. 4 shows a cross-section of a third embodiment of the safety device according to the invention, likewise provided with a movable element arranged in a linearly displaceable manner, wherein the movable element is in a first position.

Fig. 5 shows a cross-section of the embodiment according to fig. 4, wherein the movable element is in a second position.

Fig. 6 shows a cross-section of the embodiment according to fig. 4, wherein the movable element is in a third position.

Fig. 7 shows a cross-section of a fourth embodiment of the safety device according to the invention, provided with a rotatably arranged movable element.

Fig. 8 shows a scheme of the location of the safety device according to the invention in a supply line for feeding a mixture of coal particles and fluid to the burner of a coal gasification plant.

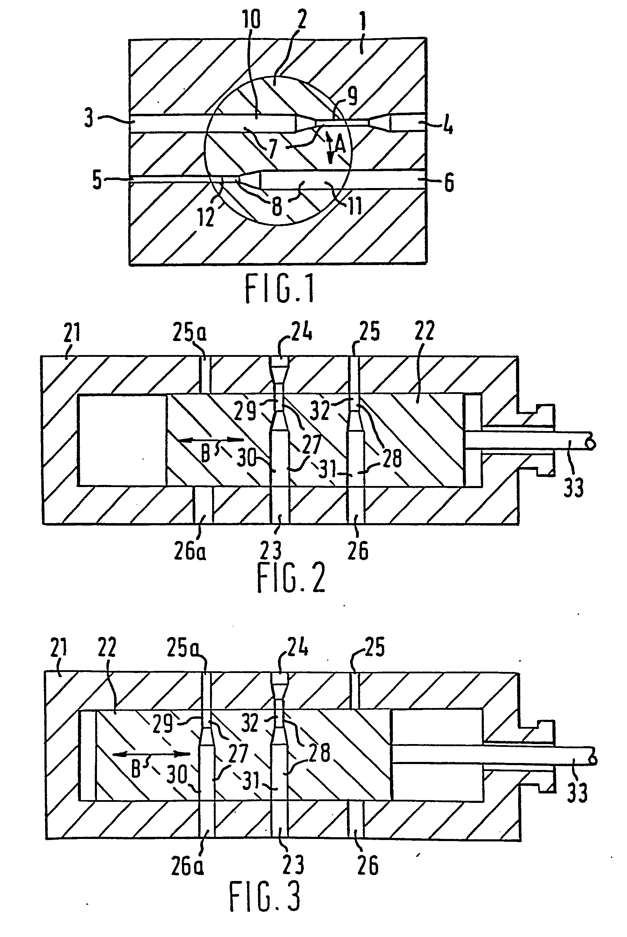

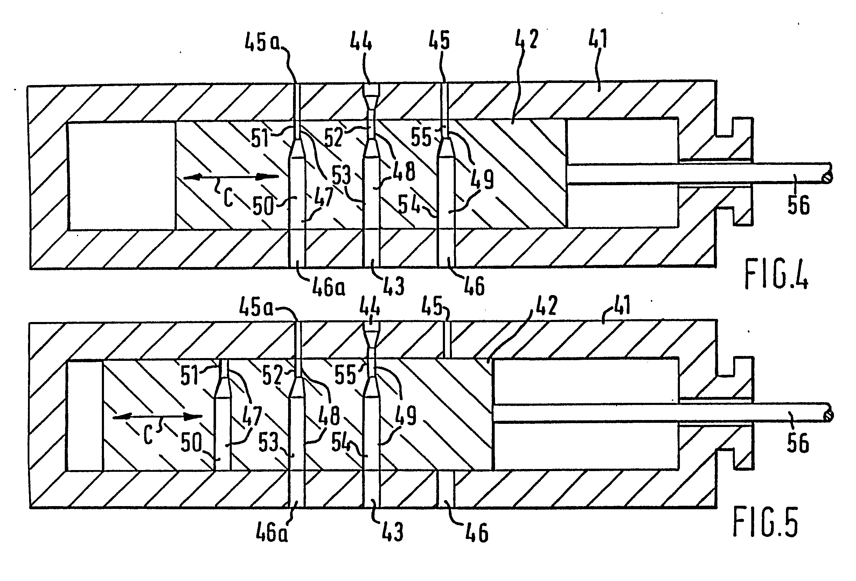

In the embodiment according to figure 1 a movable cylindrical element 2 is so arranged in a housing 1 that the element 2 is rotatable around its central longitudinal axis, as indicated by arrow A. The housing 1 is provided with an inlet 3 and an outlet 4 for the mixture of coal particles and fluid. The housing 1 is also provided with an inlet 5 and an outlet 6 for a fluid for removing blockages. In the rotatable element 2 two channels 7 and 8 are present, which channels 7 and 8 are parallel to each other and perpendicular to the central longitudinal axis of the element 2. In the shown position of the element 2 the channel 7 connects the inlet 3 to the outlet 4 in such a manner that in the direction from inlet 3 to outlet 4, a narrow part 9 of the channel 7 is located after a wide part 10 of the channel 7. In the same position of the element 2, the channel 8 connects the inlet 5 to outlet 6 in such a manner that in the direction from inlet 5 to outlet 6 a wide part 11 of the channel 8 is located after a narrow part 12 of the channel 8.

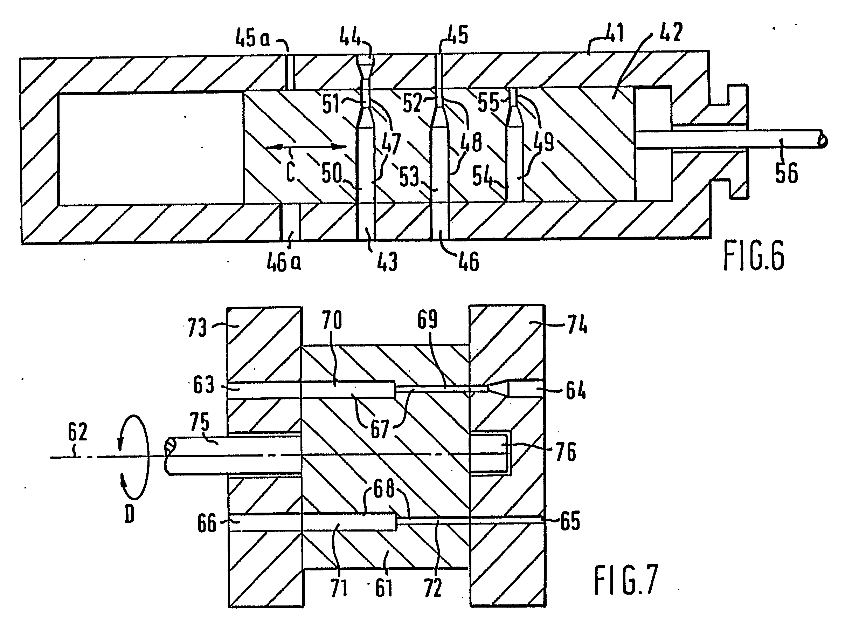

In the embodiment according to figures 2 and 3, a movable element 22 is so arranged in a housing 21 that the element 22 is linearly displaceable in the direction of its longitudinal axis, as indicated by arrow B. The housing 21 is provided with an inlet 23 and an outlet 24 for the mixture of coal particles and fluid. The housing 21 is also provided with a double set of inlets 25 and 25a and outlets 26 and 26a for a fluid for removing blockages. In the movable element 22 two channels 27 and 28 are present.

In the position of the movable element 22 as shown in figure 2 channel 27 connects inlet 23 to outlet 24 in such a way that, in the direction from inlet 23 to outlet 24, a narrow part 29 of channel 27 is located after a wide part 30 of channel 27. In the same position of element 22, channel 28 connects inlet 25 to outlet 26 in such a way that, in the direction from inlet 25 to outlet 26, a wide part 31 of channel 28 is located after a narrow part 32 of channel 28.

In the position of the movable element 22 as shown in figure 3, the channel 28 connects the inlet 23 to the outlet 24 and the channel 27 connects the inlet 25a to the outlet 26a. In the direction from inlet 23 to outlet 24, the narrow part 32 of the channel 28 is located after the wide part 31 of the channel 28 and, in the direction from inlet 25a to outlet 26a, the wide part 30 of the channel 27 is located after the narrow part 29 of the channel 27. To enable the movable element 22 to be displaced to the desired positions, one end of the element 22 is provided with a driving rod 33 passing through the wall of the housing 21.

In the embodiment according to figures 4, 5 and 6, a movable element 42 is so arranged in a housing 41 that the element 42 is linearly displaceable in the direction of its longitudinal axis, as indicated by arrow C. The housing 41 is provided with an inlet 43 and an outlet 44 for the mixture of coal particles and fluid. The housing 41 is also provided with a double set of inlets 45 and 45a and outlets 46 and 46a for a fluid for removing blockages. The movable element 42 is provided with three channels 47, 48 and 49.

In the position of the movable element 42 as shown in figure 4 the channel 47 connects the inlet 45a to the outlet 46a in such a way that, in the direction from inlet 45a to outlet 46a, a wide part 50 of channel 47 is located after a narrow part 51 of channel 47. In the same position of the element 42 the channel 48 connects the inlet 43 to the outlet 44 and the channel 49 connects the inlet 45 to the outlet 46. In the direction from inlet 43 to outlet 44, a narrow part 52 of channel 48 is located after a wide part 53 of channel 48 and, in the direction from inlet 45 to outlet 46, a wide part 54 of channel 49 is located after a narrow part 55 of channel 49.

In the position of the movable element 42 as shown in figure 5, channel 49 has taken the place of channel 48 and channel 48 has taken the place of channel 47. In this position of element 42 channel 47 is out of operation.

In the position of movable element 42 as shown in figure 6, channel 47 has taken the place of channel 48 and channel 48 has taken the place of channel 49. In this position of the element 42 channel 49 is out of operation.

To enable the movable element 42 to be displaced to the desired positions, one end of element 42 is provided with a driving rod 56 passing through the wall of the housing 41.

In the embodiment according to figure 7 a movable cylindrical element 61 is rotatably connected to a first body 73 by a shaft 75 and to a second body 74 by a pivot 76, so that the cylindrical element 61 is rotatable around its central longitudinal axis 62 relative to the bodies 73 and 74 in the directions as indicated by arrow D.

The cylindrical element 61 is provided with two channels 67 and 68 which are parallel to the central axis 62.

The first body 73 is provided with an inlet 63 for the mixture of coal particles and fluid and with an outlet 66 for the fluid for removing blockages. The second body 74 is provided with an outlet 64 for the mixture of coal particles and fluid and with an inlet 65 for the fluid for removing blockages. In the shown position of the element 61, the channel 67 connects the inlet 63 to the outlet 64 in such a manner that in the direction from inlet 63 to outlet 64, a narrow part 69 of the channel 67 is located after a wide part 70 of the channel 67. In the same position of the element 61, the channel 68 connects the inlet 65 to the outlet 66 in such a manner that in the direction from inlet 65 to outlet 66 a wide part 71 of the channel 68 is located after a narrow part 72 of the channel 68.

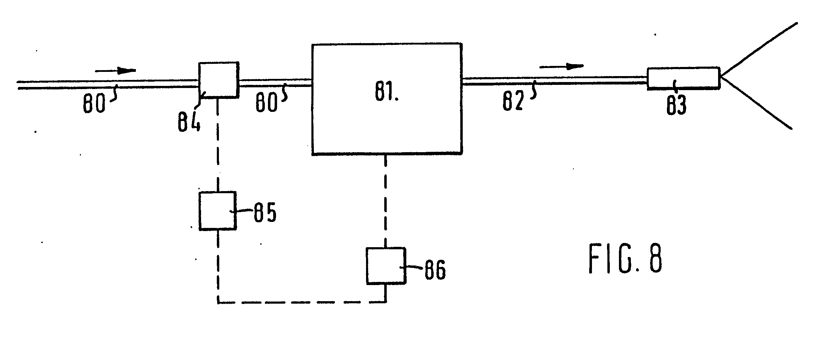

The use of the safety device according to the invention will now be described with reference to figure 8.

In figure 8, reference numeral 80 indicates a line for feeding the mixture of coal particles and fluid to a safety device 81 of the kind as described hereinbefore. From the safety device 81 extends a line 82 for the mixture of coal particles and fluid to a burner 83 of a coal gasification plant (not shown). A flow meter 84 is arranged in the line 80 for determining the flow rate of the mixture of coal particles and fluid in the line 80. This flow meter 84 is connected to a controller 85 that is connected in turn to a servomotor 86 which is capable of adjusting the movable element of the safety device. In figure 8 the flow meter 84 is arranged in line 80. In an alternative arrangement (not shown), the flow meter may be placed in line 82, if desired.

The operation of the system according to figure 8 is as follows: Assume that the safety device 81 used, is the embodiment according to figure 1. The line 80 is then connected to the inlet 3 and the line 82 to the outlet 4. If there are no coarse particles in the mixture of coal particles and fluid, the mixture will freely flow to the burner 83 through line 80, channel 7 and line 82. If coarse particles are present in said mixture, they will completely or partly block the narrow part 9 of the channel 7, with the result that the flow meter 84 indicates a fall in the passing quantity of mixture. The flow meter 84 then issues a signal to the controller 85 which compares the signal with a predetermined desired value. If the value measured is lower than the desired value, a signal is passed to the servomotor 86; which adjusts the movable element 2 of the safety device 81 in such a way that channels 7 and 8 interchange places. Since the clean, i.e. the non-blocked, channel 8 now forms the connection between inlet 3 and outlet 4, the mixture of coal particles and fluid can again freely flow to the burner 83. The blocked channel 7, which now forms the connection between inlet 5 and outlet 6, can now be blown out, since inlet 5 is connected to a line (not shown) supplying pressurized fluid that removes the blockage from the narrow part 9 and entrains it through the wide part 10 and through the outlet 6. When a blockage occurs in the channel 8, which is now located between inlet 3 and outlet 4, the abovementioned process is repeated, i.e. the channels 7 and 8 again interchange places.

If the safety device 81 used, is the embodiment according to figures 2 and 3, the line 80 is connected to the inlet 23 and the line 82 is connected to the outlet 24. The mixture of coal particles and fluid then flows to the burner 83 through line 80, channel 27 and line 82 (see figure 2). As soon as a blockage occurs in the narrow part 29 of the channel 27, the element 22 is displaced to the position as shown in figure 3 by the servomotor 86. The clean, non-blocked channel 28 then takes the place of the blocked channel 27 and the channel 27 is then located between the inlet 25a and the outlet 26a. In this position of the element 22, the mixture of coal particles and fluid can freely flow to the burner 83, namely through line 80, channel 28 and line 82. Since inlet 25a is connected to a line (not shown) supplying pressurized fluid, the blockage in the narrow part 29 of channel 27 will be entrained by the fluid and be discharged through the wide part 30 and the outlet 26a. In the event of the next blockage, now in channel 28, the element 22 is returned to the position according to figure 2 by servomotor 86. The blown-out channel 27 is then again between inlet 23 and outlet 24, so that the mixture of coal particles and fluid can again freely flow to the burner 83, and the blocked channel 28 is then located between the inlet 25 and the outlet 26. Since the inlet 25 is also connected to a line (not shown) supplying pressurized fluid, the blockage in the narrow part 32 of channel 28 is entrained by the fluid and removed through the wide part 31 and the outlet 26. When the next blockage occurs, now again in channel 27, element 22 is returned to the position according to figure 3 by servomotor 86, after which the whole process is repeated.

If the safety device 81 used, is the embodiment according to figures 4, 5 and 6, line 80 is connected to the inlet 43 and line 82 is connected to the outlet 44. The mixture of coal particles and fluid then flows to the burner 83 through line 80, channel 48 and line 82 (see figure 4). As soon as a blockage occurs in the narrow part 52 of the channel 48, the servomotor 86 displaces the movable element 42 either to the position according to figure 5 or to that according to figure 6. In the first case the non-blocked channel 49 takes the place of channel 48 and in the second case the non-blocked channel 47 takes the place of channel 48. In both cases the mixture of coal particles and fluid can again freely flow to the burner. Since both the inlet 45 and the inlet 45a are connected to a line supplying pressurized fluid, channel 48 will be blown out, both in the position according to figure 5 and in the position according to figure 6. When the next blockage occurs, now in channel 49 or in channel 47, the element 42 can be returned to the position according to figure 4, after which the whole process is repeated.

The advantage of the embodiment according to figures 4, 5 and 6 is that a spare channel is present in element 42, which can be useful if a channel were to become so blocked that removal of the blockage would not be possible without disassembly of the safety device.

If the safety device 81 used, is the embodiment according to figure 7, line 80 is connected to the inlet 63 and line 82 to the outlet 64. If there are no coarse particles in the mixture of coal particles and fluid, the mixture will freely flow through line 80, inlet 63, channel 67, outlet 64 and line 82 to the burner 83. As soon as a blockage occurs in the narrow part 69 of the channel 67, the servomotor 86 rotates the movable element 61 of the safety device 81 in such a way that the channels 67 and 68 interchange places. Since the non-blocked channel 68 now forms the connection between inlet 63 and outlet 64, the mixture of coal particles and fluid can again freely flow to the burner 83. The blocked channel 67, which now forms the connection between inlet 65 and outlet 66, can now be blown out, since inlet 65 is connected to a line (not shown) supplying pressurized fluid that removes the blockage from the narrow part 69 and entrains it through the wide part 70 and through the outlet 66. When a blockage occurs in channel 68, which is now located between inlet 63 and outlet 64, the above-mentioned process is repeated, so that the channels 67 and 68 again interchange places.

The diameters of the narrow parts, 9, 12, 29, 32, 51, 52, 55, 69 and 72 of the respective channels, 7, 8, 27, 28, 47, 48, 49, 67 and 68 are smaller than the diameters of the burner passages, so that it is ensured that the safety device will not allow the passage of particles that could block the burner passages.

The fluid used in the mixture of coal particles and fluid is, for example, a gas such as nitrogen ($N_2$), synthesis gas ($CO + H_2$) or steam. The fluid used in the mixture of coal particles and fluid, however, can also be a liquid, for example oil, water or a mixture of water and oil.

The fluid used for blowing out the channels in the movable element is, for example, air or nitrogen.

The very short interruption of the feed of the mixture of coal particles and fluid to a burner in the operation of the safety device appertaining to the relevant burner has no adverse effect on the coal gasification process, since coal gasification plants are normally equipped with several burners. According to the invention each burner is provided with an appertaining safety device as described in the above.

## Claims

1. A safety device for protecting against blockage a burner of a coal gasification plant fed with a mixture of coal particles and fluid, which safety device comprises an inlet (3) and an outlet (4) for the mixture of coal particles and fluid, an inlet (5) and an outlet (6) for a fluid for removing blockages, and a movable element (2), characterized in that the movable element (2) is provided with at least two channels (7, 8), each channel consisting of a wide (10, 11) and a narrow part (9, 12), wherein the channels and the inlets and outlets are so arranged that, in a certain position of the movable element, a channel (7) forms a communication between the inlet (3) and outlet (4) for the mixture of coal particles and fluid, in such a way that in the direction from inlet to outlet the narrow part (9) is located after the wide part (10) of the channel (7), and that another channel (8) forms a communication between the inlet (5) and the outlet (6) for the fluid for removing blockages, in such a way that in the direction from inlet to outlet the wide part (11) is located after the narrow part (12) of the channel (8), wherein the movable element (2) can be displaced from said position to another position so that one channel takes the place of another channel.

2. The safety device as claimed in claim 1, characterized in that the channels in the movable element are parallel to each other.

3. A coal gasification plant provided with a burner and a supply line for feeding a mixture of coal particles and fluid to the burner, characterized in that a safety device as claimed in claims 1 or 2 is incorporated in said supply line.

## Patentansprüche

1. Eine Sicherheitsvorrichtung zum Schutz eines Brenners einer Kohlevergasungsanlage gegen Blockierung, der von einer Mischung aus Kohleteilchen und Fluid beschickt ist, welche Sicherheitsvorrichtung einen Einlaß (3) und einen Auslaß (4) für die Mischung von Kohleteilchen und Fluid, einen Einlaß (5) und einen Auslaß (6) für ein Fluid zum Beheben von Blockierungen und ein bewegliches Element (2) aufweist, dadurch gekennzeichnet, daß das bewegliche Element (2) mit wenigstens zwei Kanälen (7, 8) versehen ist, jeder aus einem weiten (10, 11) und einem schmalen Teil (9, 12) bestehend, wobei die Kanäle und die Einlässe und Auslässe so angeordnet sind, daß, in einer bestimmten Stellung des beweglichen Elements, ein Kanal (7) eine kommunizierende Verbindung zwischen dem Einlaß (3) und dem Auslaß (4) für die Mischung von Kohleteilchen und Fluid bildet, derart, daß in der Richtung von Einlaß zum Auslaß der schmale Teil (9) nach dem weiten Teil (10) des Kanals (7) angeordnet ist, und daß ein weiterer Kanal (8) eine kommunizierende Verbindung zwischen dem Einlaß (5) und Auslaß (6) für das Fluid zum Beheben von Blockierungen bildet, derart, daß in der Richtung von Einlaß zum Auslaß der weite Teil (11) nach dem schmalen Teil (12) des Kanals (8) angeordnet ist, wobei das bewegliche Element (2) so von dieser Stellung in eine weitere Stellung verschiebbar ist, daß ein Kanal die Stelle eines weiteren Kanals einnimmt.

2. Die Sicherheitsvorrichtung, wie in Anspruch 1 beansprucht, dadurch gekennzeichnet, daß die Kanäle im beweglichen Element zueinander parallel sind.

3. Eine Kohlevergasungsanlage, die mit einem Brenner und einer Versorgungsleitung zum Beschicken des Brenners mit einer Mischung aus Kohleteilchen und Fluid versehen

**0 041 285**

ist, dadurch gekennzeichnet, daß eine Sicherheitsvorrichtung, wie in den Ansprüchen 1 oder 2 beansprucht, in der Versorgungsleitung einbezogen ist.

## Revendications

1. Un dispositif de sécurité pour protéger contre l'obstruction un brûleur d'une installation de gazéfication de charbon alimentée en un mélange de particules de charbon et de fluide, lequel dispositif de sécurité comprend une entrée (3) et une sortie (4) pour le mélange de particules de charbon et de fluide, une entrée (5) et une sortie (6) pour un fluide destiné à supprimer les obstructions, et un élément mobile (2), caractérisé en ce que l'élément mobile (2) est pourvu d'au moins deux canaux (7, 8), chaque canal étant constitué d'une partie large (10, 11) et d'une partie étroite (9, 12), les canaux et les entrées et sorties étant disposés de manière que, dans une certaine position de l'élément mobile, un canal (7) forme une communication entre l'entrée (3) et la sortie (4) pour le mélange de particules de charbon et de fluide, de manière que, dans la direction allant de l'entrée à la sortie, la partie étroite (9) soit située après la partie large (10) du canal (7), et qu'un autre canal (8) forme une communication entre l'entrée (5) et la sortie (6) pour le fluide destiné à supprimer les obstructions, de manière que, dans la direction allant de l'entrée à la sortie, la partie large (11) se trouve située après la partie étroite (12) du canal (8), l'élément mobile (2) pouvant être déplacé de ladite position à une autre position telle qu'un canal prenne la place d'un autre canal.

2. Un dispositif de sécurité selon la revendication 1, caractérisé en ce que les canaux dans l'élément mobile sont parallèles entre eux.

3. Une installation de gazéfication de charbon pourvue d'un brûleur et d'une canalisation d'alimentation pour faire arriver un mélange de particules de charbon et de fluide à un brûleur, caractérisé en ce qu'un dispositif de sécurité selon l'une des revendications 1 ou 2 est incorporé dans la canalisation d'alimentation.

FIG.1

FIG.2

FIG.3

FIG.4

FIG.5

FIG.6

FIG.7

FIG. 8